# EUROPEAN PATENT APPLICATION

(11) **EP 1 050 835 A2**
(43) Date of publication of application: **08.11.2000**
(21) Application number: 00303839.5
(22) Date of filing: 08.05.2000
(51) Int. Cl.: G06F 17/60

(54) **Rewarding customer transactions**

(30) Priority: 06.05.1999 GB 9910507
(71) Applicant: NCR INTERNATIONAL INC., Dayton, Ohio 45479 (US)
(72) Inventor: Woods, Sarah, London SW1W 8QR (GB); Mackay, Robin, London E1 9WB (GB)
(74) Representative: Cleary, Fidelma

(57) **Abstract**

A method of operating a loyalty-scheme involving one or more members and one or more participating entities is provided. The method comprises issuing a token to which a certain value is credited in response to a transaction with a participating entity and increasing the value of that token in response to at least one further transaction with a participating entity. The token is not associated with a specific member of the scheme. The method also comprises providing one or more public terminals at which the value of the token can be determined and exchanged for money or moneys worth, for example a voucher which can be exchanged for goods or services.

## Description

The present invention relates to a method of rewarding customer transactions and to a first and second terminal for use with that method.

In today's increasingly competitive commercial environment, banking institutions and other providers of financial services can no longer rely on customer loyalty. However, experience has shown that if customers can be captured when young, there is at least a reasonable chance that they will stay loyal to a particular institution in the future. Unfortunately, many young people perceive that banking and financial services are inherently boring subjects and they do not wish to become involved with them any earlier than absolutely necessary. Consequently, the institutions have to provide something different to attract these young, but important, customers.

In addition, the costs of the provision of various banking services varies considerably with the channels via which such services are provided. Transactions at an Automatic Teller Machine (ATM), for example, are comparatively cheap while transactions which involve a human teller are comparatively very expensive. Ideally, therefore, the young customers need to be attracted to use the computerised channels of service provision rather than the human ones. Not only does this ensure that such customers are cheap to service while young but also instils these low-cost (to the institution) habits for life.

Various schemes have been launched in the past to encourage young people and children to open bank accounts and to operate them responsibly. Such schemes have often revolved around free gifts to reward certain customer behaviour such as attaining a particular savings target. Unfortunately, these schemes tend to reinforce the conviction of children that banking issues are boring because it encourages them to leave money on deposit when they would rather be spending it. Children's accounts have been provided which allow the children to use self-service banking terminals such as ATMs. However, the services typically available to children (cash withdrawal and balance print-out) are again rather dull. These will not encourage pro-ATM feelings on the part of the young customer.

It is an object of the present invention to ameliorate the above disadvantages.

According to a first aspect of the invention there is provided a method of operating a loyalty-scheme, the scheme involving one or more members, one or more participating entities, the method comprising in response to a transaction with a participating entity, issuing to a token to which a certain value is credited, increasing the value of that token in response to at least one further transaction with a participating entity, wherein the token is not associated with a particular member of the scheme; providing one or more public terminals at which the value of the token can be determined and at which at least part of the token value can be exchanged for money or moneys worth.

The present inventors have studied the behaviour of children, particularly in a critical age group of between 9 and 12 years old. Certain issues have been identified which form the foundation of the present invention. These children are particularly fond of collecting and peer pressure is especially powerful. No one in this age group wishes to be seen to be at a disadvantage in comparison with their school mates and other friends.

In this method, therefore, the member or customer (the child) is encouraged to amass a number of tokens from different participating entities. The participating entity may be a commercial enterprise providing goods or services but may also be a club or other non-commercial organisation.

The research of children's behaviour which has been discussed above has further revealed that children like to swap things. By providing tokens which are not specific to a particular customer this procedure is facilitated.

The value of the plurality of tokens may then be aggregated, for example at a custom built terminal or at a banking terminal such as an Automated Teller Machine. This is much more powerful than a traditional loyalty-card scheme where only a single retailer or small group of retailers share a loyalty-scheme.

In a preferred embodiment of the invention the value the tokens may be increased by a further transaction or transactions. This reduces the number of tokens in circulation by encouraging the children to increment the value of their card (e.g. from a music store) rather than obtaining a new card with every transaction. The customer can be encouraged to do this by providing fewer (or zero) points for a transaction when a new card is also to be issued.

At least some participating entities in the loyalty-scheme issue a separate token to a member of the scheme but it should be understood that the same token could be used to accrue value as a result of transactions with affiliated entities or with different unrelated entities.

In a further advantageous embodiment of the invention, the value of the plurality of different tokens may be aggregated and may be exchanged for a voucher which will allow a purchase to be made from a store or service provider. This voucher may be a paper voucher printed at the terminal or an electronic voucher charged to a data carrier (for example the identity means provided to the customer, a smart card etc) or by some other means.

The loyalty-scheme essentially involves some sort of scheme manager that may be one of the participating entities or an independent entity, such as a financial institution. The loyalty-scheme manager may have responsibility for provision and maintenance of the public terminals. In a further preferred embodiment, the public terminal may be automated teller machine or other public terminal providing financial services.

From a second aspect, the invention resides in a method of rewarding customer transactions, the method comprising providing the customer with identification means for identifying themselves at a public terminal, providing in response to a transaction with a first participating entity, a first token to which a certain value is credited, providing in response to a transaction with a second participating entity, a second token to which a certain value is credited and aggregating the value of the first token and the second token at the public terminal.

It should be understood the term customer transaction is restricted to commercial transactions and that the participating entity may be a commercial enterprise providing goods or services but may also be a club or other non-commercial organisation.

The value of the first or the second token may be increased in response to further transactions with the first or second participating entity respectively and the first or second participating entity may be a group of affiliated entities.

According to a third aspect of the present invention, there is provided a terminal for issuing a loyalty-scheme token in response to a customer transaction with a participating entity and for crediting that token with value in response to a further transaction or transactions. Such a terminal may be a small counter, wall or floor-mounting terminal in the vicinity of the cash desk in a store or ticket kiosk in a cinema (movie house) and so on.

According to a fourth aspect of the present invention there is provided a terminal, said terminal being provided with a loyalty-scheme token reader and being adapted to aggregate a value or two or more loyalty-scheme tokens in response to reading of the two or more tokens.

The public terminal may be a custom-built terminal or a banking terminal. Preferably, the public terminal is a special automatic teller machine having first means for reading a customer's identity means and second means for reading the value of a one or more loyalty-scheme tokens

The terminals which form the third and fourth aspects of the invention are equally applicable to tokens in accordance with the first and second aspects of the invention

Further preferred features of the present invention will be apparent to the skilled reader from the following description, which is given by way of non-limiting examples.
Figures 1(a) to 1(f) constitute a storyboard that illustrates a series of events employing the invention;
Figure 2 shows a flow chart of a method according to a first embodiment of the invention;

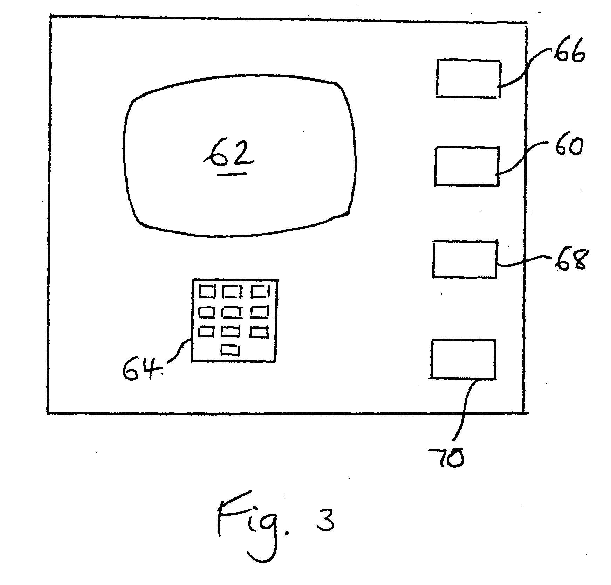

Figure 3 illustrates a schematic diagram of a public terminal according to a preferred embodiment of the invention.

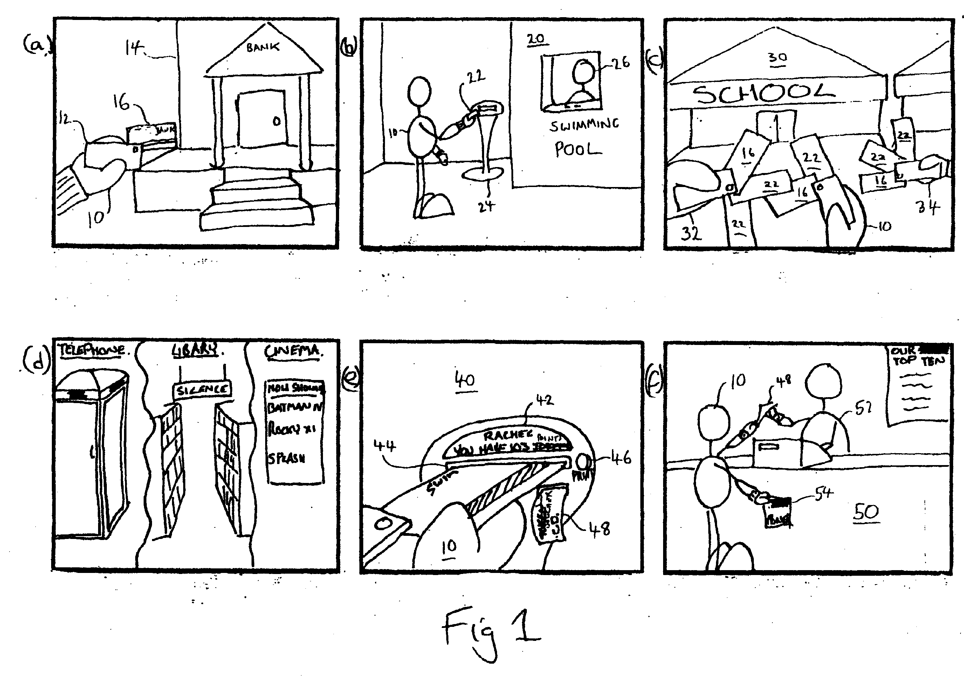

A story board is illustrated in Figures 1(a) to 1(f). In Figure 1(a) a new customer 10 called Rachael visits a bank 14 and opens a special loyalty account. Rachael receives from the bank a wallet 12 which contains a membership card 16 which serves as a personal identity verification means. Rachael then visits a number of enterprises which offer goods or services.

In Figure 1(b) Rachael is visiting a swimming pool 20 A floor-mounted card reader 24 is provided at the swimming pool. When Rachael pays for her swimming session, the cashier 26 provides Rachael with a loyalty card 22 which comprises a swimming pool token and is made of a cheap plastics card carrying a magnetic stripe. The cashier activates the card reader/writer 24 so that Rachael can insert her card 22 to add points thereto. The number of points given for a particular transaction can be used to encourage particular consumer behaviour. For example, Rachael may receive more points for using the swimming pool at off-peak times. It should be appreciated that on subsequent visits to the pool, Rachael will not receive a new card but, on payment for the swimming session, will insert her existing card to accumulate further loyalty points

In Figure 1(c), Rachael goes to school 30 and discovers that her friends Jack 32 and Sandra 34 have more cards than she does. In order not to feel disadvantaged, Rachael resolves to obtain further loyalty cards to place in her wallet 12.

In Figure 1(d), Rachael then visits several service-providers in order to obtain more loyalty cards. The examples shown are the telephone company, the library and the cinema (movie theatre). Rachael could equally well have bought goods from participating retailers to obtain loyalty cards. When Rachael returns to school now, she has a respectable collection of loyalty cards with which to show off. Because many of the loyalty cards are not registered to a specific person, Rachael can trade or swap such loyalty cards with her friends with impunity. Some of the cards may be registered to Rachael and so she cannot trade these. A portable card-reader may be provided, for example, on a key ring to allow people to check the balance of points.

By continuing to use the swimming pool regularly, Rachael attains a significant number of points on her swimming pool loyalty card. In Figure 1(e), Rachael visits a terminal 40 provided by the banking institution at which she holds the loyalty account. The terminal includes a display 42 and at least one card-reader 44. Rachael first inserts her membership card 16 and identifies herself to the terminal 40 in some known manner (for example, by using a PIN, fingerprint recognition etc). Rachael then inserts her swimming pool loyalty card 22 into the card reader 44. The display 42 indicates that Rachael has amassed 103 points on this card. Alternatively, or in addition, a statement (similar to a bank statement) may be provided on-screen or be printed out. When Rachael has amassed sufficient points she can press the print button 46 and obtain a voucher 48 from the terminal printer. The voucher 48 shown is valid for the purchase of one compact disc (CD) but it should be appreciated that vouchers for various other commodities, events or services could be issued. In some cases, the voucher may be limited to goods or services related to those that were used or purchased to accumulate the loyalty points.

In Figure 1(f), Rachael visits a music store 50 and presents her CD voucher 48 to the assistant 52. Rachael uses the voucher 48 to purchase a compact disc 54. Because the visit to the terminal 40 of the banking institution has led to the acquiring of a new compact disc, a positive association is made in Rachael's mind relating to use of the terminal and to the branding of the banking institution.

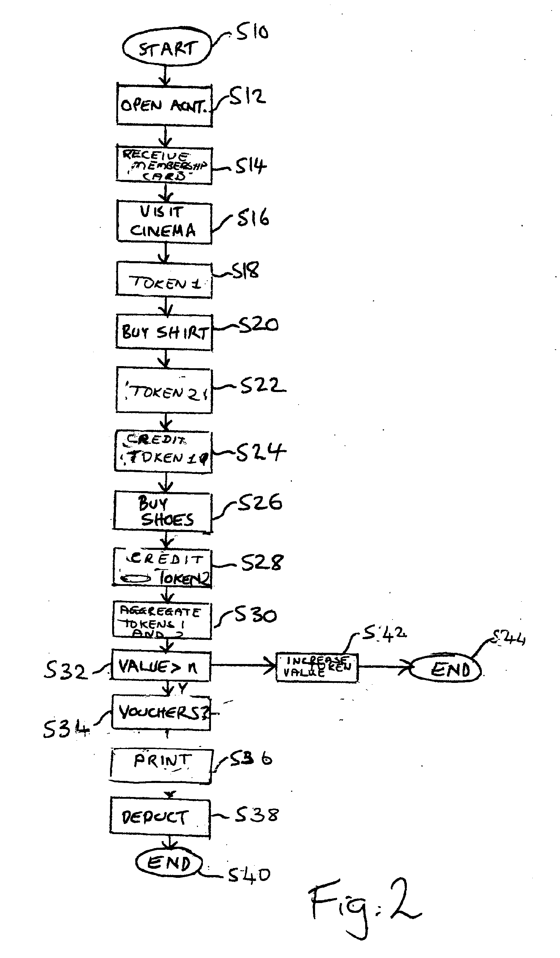

Figure 2 shows a flow diagram of a method according to an embodiment of the present invention. In this embodiment, loyalty cards are provided by each of a group of commercial enterprises that participate in the customer loyalty-scheme and where the value of two or more loyalty cards from different enterprises may be amalgamated.

The method starts at step S10 and proceeds to step S12 in which a customer opens an account at a bank and receives a loyalty-scheme membership card (step S14). The membership card may be incorporated into a traditional cash card for use in everyday financial transactions involving the new bank account or may be a dedicated loyalty-scheme membership card. At step S16, the customer visits a cinema where he or she receives a first loyalty card (step S18) to which a certain number of points are credited for having used the facilities of that cinema. At step S20, the customer visits a clothing store and buys a shirt or other item of clothing. To reward the customer for the purchase at that store, the customer another loyalty card (the second loyalty card) credited with a certain number of loyalty points (step S22). At step S24, the customer returns to the same cinema or an affiliated cinema to see another film and further points are credited to the first loyalty card. At step S26 the customer buys shoes from a store affiliated to that at which he or she bought the shirt. Because of the relationship with the first store, the shoe store can credit further points to the second loyalty card.

The customer now visits a terminal provided by the banking institution at which the account was opened at which the value of the individual loyalty cards can be read by a suitable reading device (step S30). At step S32, the aggregate value of the loyalty cards is determined. If the aggregate value of the loyalty cards exceeds a predetermined value, then the customer is offered a number of vouchers to purchase other commodities or events, for example to buy a CD or to visit the cinema. If the customer selects a voucher (step S34), this is printed out by the terminal (step S36) and the value of the selected voucher is deducted from the aggregate value by reducing the appropriate number of points on one or more of the individual loyalty cards (Step 38). Processing terminates at step S40.

If the aggregate value of the loyalty cards does not exceed a predetermined value, then processing proceeds to step S42 where the customer is encouraged increase the number of points on some or all of the loyalty cards. The method terminates at step S44.

It should be appreciated that the loyalty cards may not be registered to a particular individual. In such a case, it is possible to swap loyalty cards with another user of the system or to join together and use the points on a number of user's loyalty cards in order to obtain a particular voucher.

Although research has shown that children prefer to collect lots of various cards (quantity rather than quality), it should be understood that a single loyalty card could be issued to the customer by a participating enterprise in the loyalty-scheme and points could be credited to this card by the other enterprises participating in the scheme rather than each issuing a separate card. The card could be designed to carry branding for some or all of the participating enterprises.

The terminals used in the loyalty-scheme may be a custom-built kiosk or a "hole-in wall" terminal and may be designed so as to appeal to young children participating in the loyalty-scheme. The terminals may be installed at locations which are relevant to and convenient of children such as schools, playgrounds, parks, theme restaurants such as Planet Hollywood etc. Alternatively, the terminal may be incorporated into a conventional Automated teller machine ATM as is shown in Figure 4 The ATM has all the usual components such as a card reader 60, a display screen 62, a key pad 64, a receipt printer 66 and a cash dispenser 68 but also includes a further card reader 70 for reading loyalty cards. However, it should be understood that a single card reader could be provided which was capable of reading both the user's cash card and the loyalty cards.

While the present invention has been described in the context of plastic loyalty cards carrying a magnetic strip, both the loyalty-scheme membership cards and the individual loyalty cards may comprise any suitable such means. For example, i-buttons (from Dallas Semiconductor, Texas, USA), minted coins or medals, printed paper tokens or smart cards or smart tags such as RF tags could be used. The advantage of magnetic cards is that they are cheap and easy to provide. They also give an area on which advertising material can be included to promote the branding of the enterprises participating in the loyalty-scheme. Smart cards also possess this advantage but are more expensive. They are, however, more secure. I-buttons provide a similar level of security to smart cards although they are quite expensive. They do not provide a large area for printed material but, advantageously, are not perceived as boring by the customers in the 9-12 year age group who are very willing to embrace technology. Paper tokens have the advantage that they are cheap to provide, can be printed with up-to-date material and can carry the value of points stored in a human-readable form. This is advantageous in the swapping arena where customers will know the value of the tokens that are being exchanged.

## Claims

**1.** A method of operating a loyalty-scheme, the scheme involving one or more members, one or more participating entities, the method comprising:
in response to a transaction with a participating entity, issuing to a token to which a certain value is credited,
increasing the value of that token in response to at least one further transaction with a participating entity, wherein the token is not associated with a particular member of the scheme;
providing one or more public terminals at which the value of the token can be determined and at which at least part of the token value can be exchanged for money or moneys worth.

**2.** A method according to claim 1, wherein at least some participating entities in the loyalty-scheme issue a separate token to a member of the scheme.

**3.** A method according to claims 1 or 2, wherein only the same or an affiliated participating entity will increase the value of a token in response to at least one further transaction with that or an affiliated participating entity.

**4.** A method according to claim 2, wherein the values of one or more tokens may be aggregated at the public terminal.

**5.** A method according to claim 1, wherein the loyalty-scheme involves a loyalty-scheme manager and where the public terminal is provided by that manager

**6.** A method according to claim 5, wherein the loyalty-scheme manager is a financial institution.

**7.** A method according to claim 5 or 6, wherein the public terminal is an automated teller machine or other public terminal providing financial services.

**8.** A method of rewarding customer transactions, the method comprising:
providing the customer with identification means for identifying themselves at a public terminal;
providing in response to a transaction with a first participating entity, a first token to which a certain value is credited;
providing, in response to a transaction with a second participating entity, a second token to which a certain value is credited.
aggregating the value of the first token and the second token at the public terminal.

**9.** A method according to claim 8, further comprising a step of increasing the value of the first or the second token in response to further transactions with the first or second participating entity respectively.

**10.** A method according to claims 8 or 9 where the first or second participating entity may be a group of affiliated entities.

**11.** A method according to any of claims 8 to 10, further comprising the step of exchanging the aggregated values of the first and second tokens for money or moneys worth at the public terminal.

**12.** A method according to any of claims 8 to 11 wherein the public terminal comprises a banking terminal.

**13.** A method according to claim 12, wherein the banking terminal comprises an automatic teller machine.

**14.** A method according to any of claims 8 to 13 wherein the first and second tokens are not associated with a specific customer.

**14.** A public terminal for issuing a loyalty-scheme token in response to a customer transaction with a participating entity and for crediting that token with value in response to a further transaction or transactions with the same or other participating entities.

**15.** A public terminal, said terminal being provided with a loyalty-scheme token reader and being adapted to aggregate a value or two or more loyalty-scheme tokens in response to reading of the two or more tokens.
